# EUROPEAN PATENT APPLICATION

(11) **EP 4 600 862 A1**
(43) Date of publication of application: **13.08.2025**
(21) Application number: 24208594.2
(22) Date of filing: 24.10.2024
(51) Int. Cl.: G06F 40/35, G06N 3/08, G06N 20/00

(54) **METHOD, APPARATUS AND DEVICE FOR GENERATING A CONVERSATION SCENARIO MODEL**

(30) Priority: 06.02.2024 CN 202410166522
(71) Applicant: Beijing Waterdrop Technology Group Co., Ltd., Beijing 100102 (CN)
(72) Inventor: SHEN, Peng, Beijing, 100102 (CN); WANG, Zhizhuo, Beijing, 100102 (CN); HUANG, Ting, Beijing, 100102 (CN); HUANG, Mingxing, Beijing, 100102 (CN); ZHOU, Xiaobo, Beijing, 100102 (CN)
(74) Representative: Chung, Hoi Kan

(57) **Abstract**

A method, an apparatus and a device for generating a conversation scenario model are provided, which relate to the technical field of intelligent conversation and can generate an information interaction model which comprehensively covers a service process so that a robot customer service controlled by the model can guide a user to trigger a text conversation which is more in line with process operation. The method includes: acquiring a question-answer conversation text formed in a historical information interaction process of a conversation scenario, wherein the question-answer conversation text comprises multiple rounds of text interaction information; adding flagged guide information into the question-answer conversation text, wherein the flagged guide information is field information obtained by processing event-tracking records in an information interaction page; and performing model training by using a question-answer conversation text with the flagged guide information to generate an information interaction model of the conversation scenario.

## Description

### TECHNICAL FIELD

The present disclosure relates to the field of intelligent conversation technologies, and in particular, to a method, an apparatus, and a device for generating a conversation scenario model.

### BACKGROUND

In the intelligent conversation scenario, the robot customer service may simulate personnel such as customer service and the like to perform information interaction such as voice or conversation with a terminal of a real user through a server or intelligent conversation device and the like, guide the user to perform a series of operations, and translate conversation content in the interaction process into text to be applied to the generation of a conversation scenario model. The generation of the conversation scenario model is mainly driven by the model, which controls the service process of conversation between the robot customer service and the user. The business process includes complex processes such as service introduction, process guidance, information confirmation, objection answer and the like. Specifically, the robot customer service initiates a conversation with the user, and the user opens the designated page for browsing, clicking, filling and other page burying operations to complete the service process.

In related art, a conversation scenario model may be trained with text information translated from conversation content. The obtained model has the capability of interacting with a user and guiding a service process. However, in a real service process, considering the duration of the service process, it is required that there are more guide nodes in the service process, and they are arranged in different orders. If the user cannot perform the service process operation according to the linguistic representation, the model generated by the conversation scenario is difficult to completely cover the service process and lacks the ability to control the conversation process.

### SUMMARY

In view of this, a method, an apparatus and a device for generating a conversation scenario model are provided in the present disclosure, and mainly aim to solve the problem that the model generated by the conversation scenario in the prior art is difficult to fully cover a service process and lacks the ability to control the conversation process.

According to a first aspect of the present disclosure, a method for generating a conversation scenario model is provided, including:
acquiring a question-answer conversation text formed in a historical information interaction process of a conversation scenario, wherein the question-answer conversation text includes multiple rounds of text interaction information;
adding flagged guide information into the question-answer conversation text, wherein the flagged guide information is field information obtained by processing event-tracking records in an information interaction page; and
performing model training by using a question-answer conversation text with the flagged guide information to generate an information interaction model of the conversation scenario.

Further, before the adding flagged guide information into the question-answer conversation text, the method further includes the following steps:
adding event-tracking in the information interaction page according to the conversation scenario to obtain event-tracking records of the process operations in the information interaction process; and
processing the event-tracking records of the process operations in the information interaction page into the flagged guide information which is represented by the field information.

Further, the adding event-tracking in the information interaction page according to the conversation scenario to obtain event-tracking records of the process operations in the information interaction process includes:
defining an event-tracking range according to the conversation scenario, in which the event-tracking is added on the operation events in the information interaction page, wherein the operation events at least include page events and click events;
capturing user's behavior data reported by the information interaction page according to the operation events of the event-tracking in response to a triggering instruction of the operation events of the event-tracking in the information interaction page; and
restoring user's operation behaviors in the information interaction process according to the user's behavior data to obtain the event-tracking records of the process operations in the information interaction process.

Further, the processing the event-tracking records of the process operations in the information interaction page into field-represented flagged guide information includes:
determining flow attribute information for triggering the operation behaviors of the user during the information interaction according to the event-tracking records of the process operations in the information interaction page, wherein the flow attribute information includes current operation behavior information of the user and interaction behavior information of the next round triggered by the current operation behavior; and
processing the flow attribute information into the field-represented flagged guide information according to a preset format.

Further, the adding flagged guide information into the question-answer conversation text includes:
defining a special embedded flag at a corresponding field position in the question-answer conversation text according to a buried position of the conversation scenario in the information interaction page; and
adding the flagged guide information into the question-answer conversation text by using the special embedded flag.

Further, the performing model training by using a question-answer conversation text with the flagged guide information to generate an information interaction model of the conversation scenario specifically includes:
performing model training by using the question-answer conversation text with the flagged guide information, and strengthening the control capability of the process operations in the conversation scenario according to the flagged guide information in the training process; and
determining the trained neural network model as the information interaction model of the conversation scenario when the iteration of the model training meets a preset condition, wherein the information interaction model is used for generating an output conversation text with process operation guidance according to an input conversation text.

Further, the text interaction information of each round includes input conversation text and output conversation text, and after the performing model training by using the question-answer conversation text with the flagged guide information to generate an information interaction model of the conversation scenario, the method further includes:
acquiring an input conversation text of current round in response to an information interaction instruction triggered by the conversation scenario;
inputting the input conversation text of current round into the information interaction model for prediction, and obtaining an output conversation text of current round for interaction feedback; and
controlling information interaction process of next round according to the output conversation text of current round.

According to a second aspect of the present disclosure, an apparatus for generating a conversation scenario model is provided, including an acquiring unit, an adding unit and a generation unit.

The acquiring unit is configured to acquire a question-answer conversation text formed in a historical information interaction process of a conversation scenario, wherein the question-answer conversation text includes multiple rounds of text interaction information.

The adding unit is configured to add flagged guide information into the question-answer conversation text, wherein the flagged guide information is field information obtained by processing event-tracking records in an information interaction page.

The generation unit 63 is configured to performing model training by using a question-answer conversation text with the flagged guide information to generate an information interaction model of the conversation scenario.

Further, the apparatus further includes an event-tracking unit and a processing unit.

The event-tracking unit is configured to perform event-tracking on the information interaction page according to the conversation scenario before adding flagged guide information into the question-answer conversation text to obtain event-tracking records of the process operations in the information interaction process.

The processing unit is configured to process the event-tracking records of the process operations in the information interaction page into field-represented flagged guide information.

Further, the event-tracking unit is specifically configured to: define an event-tracking range according to the conversation scenario, in which the event-tracking is added on operation events in the information interaction page, wherein the operation events at least include page events and click events; capture user's behavior data reported by the information interaction page according to the operation events of the event-tracking in response to a triggering instruction of the operation events of the event-tracking in the information interaction page; and restore user's operation behaviors in the information interaction process according to the user's behavior data to obtain the event-tracking records of the process operations in the information interaction process.

Further, the processing unit is specifically configured to: determine flow attribute information for triggering the operation behaviors of the user during the information interaction according to the event-tracking records of the process operations in the information interaction page, wherein the flow attribute information includes current operation behavior information of the user and interaction behavior information of the next round triggered by the current operation behavior; and process the flow attribute information into the field-represented flagged guide information according to a preset format.

Further, the adding unit is specifically configured to: define a special embedded flag at a corresponding field position in the question-answer conversation text according to a buried position of the conversation scenario in the information interaction page; and add the flagged guide information into the question-answer conversation text by using the special embedded flag.

Further, the generation unit is specifically configured to: perform model training by using the question-answer conversation text with the flagged guide information, and strengthening the control capability of the process operations in the conversation scenario according to the flagged guide information in the training process; and determine the trained neural network model as the information interaction model of the conversation scenario when the iteration of the model training meets a preset condition, wherein the information interaction model is used for generating an output conversation text with process operation guidance according to an input conversation text.

Further, the text interaction information of each round includes input conversation text and output conversation text, and the apparatus further includes an interaction unit, a prediction unit and a control unit.

The interaction unit, after the performing model training by using the question-answer conversation text with the flagged guide information to generate an information interaction model of the conversation scenario, is configured to: acquire an input conversation text of current round in response to an information interaction instruction triggered by the conversation scenario.

The prediction unit is configured to input the input conversation text of current round into the information interaction model for prediction, and obtain an output conversation text of current round for interaction feedback.

The control unit is configured to control information interaction process of next round according to the output conversation text of current round.

According to a third aspect of the present disclosure, a computer device is provided, including: a memory storing a computer program; and a processor; wherein the processor is configured, when executing the computer program, to perform steps of the method of the first aspect described above.

According to a fourth aspect of the present disclosure, a readable storage medium storing a computer program is provided, wherein the computer program, when executed by a processor, performs steps of the method of the first aspect described above.

According to the method, the apparatus and the device for generating a conversation scenario model in the present disclosure, compared with the way of performing model training by using text information translated by conversation content in the prior art, a question-answer conversation text formed in a historical information interaction process of a conversation scenario is acquired, wherein the question-answer conversation text includes multiple rounds of text interaction information; flagged guide information is added into the question-answer conversation text, wherein the flagged guide information is field information obtained by processing event-tracking records in an information interaction page; and model training is performed by using a question-answer conversation text with the flagged guide information to generate an information interaction model of the conversation scenario. In the whole process, the flagged guide information is added in the question-answer conversation text, through which the control capability of the information interaction model on the conversation process in the training process is strengthened, so that the robot customer service controlled by the model can guide the user to trigger a text conversation which is more in line with process operation, and the guide loss of the operation process in the conversation process is avoided.

The above description is merely an overview of the technical solutions of the present disclosure. Embodiments of the present disclosure are described hereinafter in order for a clear understanding of the technical solutions of the present disclosure so as to implement the technical solutions based on the specification, and further for a clear and easy understanding of the above and other objectives, features and advantages of the present disclosure.

### BRIEF DESCRIPTION OF DRAWINGS

The accompanying drawings described herein are used for providing a further understanding of the present disclosure, and form a part of the present disclosure. Exemplary embodiments of the present disclosure and descriptions thereof are for explaining the present disclosure, and do not constitute any inappropriate limitation to the present disclosure. In the accompanying drawings:
Figure 1 is a flowchart illustrating a method for generating a conversation scenario model according to an embodiment of the present disclosure;
Figure 2 is a flowchart illustrating a method for generating a conversation scenario model according to another embodiment of the present disclosure;
Figure 3 is a flow block diagram illustrating a process of performing event-tracking on an information interaction page in a conversation scenario according to an embodiment of the present disclosure;
Figure 4 is a flowchart of an implementation of step 104 of Figure 2 according to an embodiment of the present disclosure;
Figure 5 is a flowchart of an implementation of step 105 of Figure 2 according to an embodiment of the present disclosure;
Figure 6 is a flowchart illustrating a method for generating a conversation scenario model according to another embodiment of the present disclosure;
Figure 7 is a schematic structural diagram illustrating an apparatus for generating a conversation scenario model according to an embodiment of the present disclosure;
Figure 8 is a schematic structural diagram illustrating a computer device according to an embodiment of the present disclosure.

### DETAILED DESCRIPTION OF THE EMBODIMENTS

The present disclosure will now be described with reference to several exemplary embodiments. It should be understood that these embodiments are described only to enable those skilled in the art to better understand and thus implement the present disclosure, rather than to limit the present disclosure.

As used herein, the term "including" and variations thereof in the present disclosure means open-ended inclusion, that is, "including but not limited to". The term "based on" means "at least partially based on". The terms "embodiment" and "an embodiment" mean "at least one embodiment". The term "another embodiment" means "at least one other embodiment".

In the conversation scenario model generation scene, the conversation scenario model may be trained and generated by using the text information translated by the conversation content. The obtained model has the capability of interacting with the user and guiding the service process. However, in a real service process, considering the duration of the service process, it is required that there are more guide nodes in the service process, and they are arranged in different orders. If the user cannot perform the service process operation according to the linguistic representation, the model generated by the conversation scenario is difficult to completely cover the service process and lacks the ability to control the conversation process.

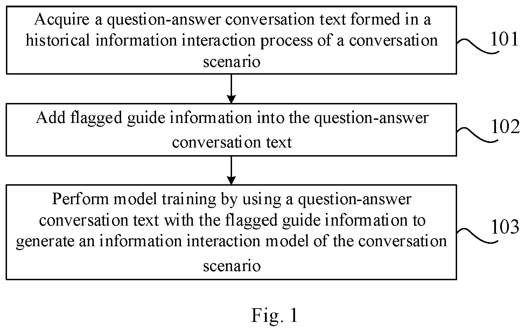

In order to solve the problem, a method for generating a conversation scenario model is provided according to an embodiment of the present disclosure, which is applied to a platform side of an intelligent conversation. As shown in Figure 1, the method includes the following steps 101 to 103.

In 101, a question-answer conversation text formed in a historical information interaction process of a conversation scenario is acquired.

The conversation scenario may be applied to artificial intelligence products of intelligent voice technology. Artificial intelligence products can help organizations with outgoing call and incoming call work. In a conversation scenario, the robot customer service may realize information interaction by generating a question-answer conversation text. In general, the question-answer conversation text includes multiple rounds of text interaction information, each round of text interaction information includes an input conversation text and an output conversation text. The input conversation text is equivalent to a question text, and the output conversation text is equivalent to an answer text. Each group of question texts and answer texts form a round of information interaction in the conversation scenario. Taking a round of information interaction as an example, the input text is "How much does it cost to get to Chengdu airport", and the answer text is "40 yuan".

It can be understood that, considering the complexity of the service process in the conversation scenario, the robot service and the user often need multiple rounds of information interaction. However, in order to efficiently complete the service process, after each round of information interaction, a corresponding process operation performed by the user on the information interaction page may be triggered. For example, the service process requires the user to open a specified website to perform process operations such as browsing, clicking, filling, and the like, so as to trigger rules of the corresponding process operations, for example, to broadcast the reply content, and to select box in the information interaction page.

Specifically, a conversation scenario generates a question-answer conversation formed by a large number of interaction tasks in the historical information interaction process. Each interaction task is equivalent to an information interaction process. The question-answer conversation text generated by the interaction tasks includes multiple rounds of text interaction information, wherein the text interaction information includes the context information of the question and answer and is represented in a question-answer form. The conversation scenario herein may be applied to various industrial scenarios including, but not limited to, an order query scenario for a product, an after-sales service scenario, a reservation scenario, a sharing scenario, etc.

The execution subject in the present disclosure may be an apparatus or a device for generating a conversation scenario model, which may be configured at a platform side of an intelligent conversation. A question-answer conversation text formed by the conversation scenario in a historical information interaction process is acquired through the platform side of the intelligent conversation, an operation flow of the conversation scenario is explored on the basis of the question-answer conversation text, and the explored operation flow is injected into a training process of the information interaction model, so as to improve the control capability of the information interaction model on the conversation flow.

In 102, the flagged guide information is added into the question-answer conversation text.

The flagged guide information is field information obtained by processing event-tracking records in an information interaction page. The field information may include, but is not limited to, operation information that triggers a behavior in the information interaction page, for example, operation information for order payment, operation information for pop-up clicks, and operation information for field filling.

Specifically, the question-answer conversation text usually triggers the user to execute each behavior operation in the information interaction page in a plurality of rounds of information interaction process. To a certain extent, these behavior operations can reflect the information guidance of the process operations in the conversation scenario. Here, each behavior operation triggered by the user in the information interaction page may be captured by adding the event-tracking, each behavior operation triggered by the user in the page is generated as flagged guide information in the way of event-tracking records, and the flagged guide information is added as a guideline label of process operations to the question-answer conversation text.

It can be understood that the behavior operation triggered by the user in the information interaction page may reflect content guidance and sequence guidance of the process operation. In the case of content guidance, the user triggers a button for order purchase in the information interaction page after consulting how to purchase an order, and in the case of sequence guidance, the user triggers a behavior operation for order filling in the information interaction page after consulting the price of the order, and then triggers a behavior operation for order payment in the information interaction page after receiving an order price reply.

In 103, model training is performed by using a question-answer conversation text with the flagged guide information to generate an information interaction model of the conversation scenario.

In the embodiment, the question-answer conversation text with flagged guide information has a guiding effect on the process operation in the information interaction page. On the basis of model training with the question-answer conversation text, flagged guide information with control capability in multi-round interactions is added to activate the process control capability of the information interaction model, which makes the generated information interaction model better able to guide the process operations in the conversation scenario.

Specifically, in the model training process, a supervised training and a method of fine-tuning may be used. Pseudo labels are generated by using a prediction result of the model, and are used as labels of unlabeled data for training. Here, a question-answer conversation text with the flagged guide information may be used as labeled data for pre-training the model to obtain an initial model. The unlabeled data is predicted by using the initial model to obtain a prediction label of each sample. The prediction label and the unlabeled data are combined to form a pseudo label data set. The model then is further trained by using the pseudo label data set to obtain an updated model. The model training and updating processes are repeated until the model converges or reaches a preset number of training iterations, and the information interaction model of the conversation scenario is generated.

According to the method for generating a conversation scenario model in the present disclosure, compared with the way of performing model training by using text information translated by conversation content in the prior art, a question-answer conversation text formed in a historical information interaction process of a conversation scenario is acquired, wherein the question-answer conversation text includes a plurality of rounds of text interaction information; flagged guide information is added into the question-answer conversation text, wherein the flagged guide information is field information obtained by processing event-tracking records in an information interaction page; and model training is performed by using a question-answer conversation text with the flagged guide information to generate an information interaction model of the conversation scenario. In the whole process, the flagged guide information is added in the question-answer conversation text, through which the control capability of the information interaction model on the conversation process in the training process is strengthened, so that the robot customer service controlled by the model can guide the user to trigger a text conversation which is more in line with process operation, and the guide loss of the operation process in the conversation process is avoided.

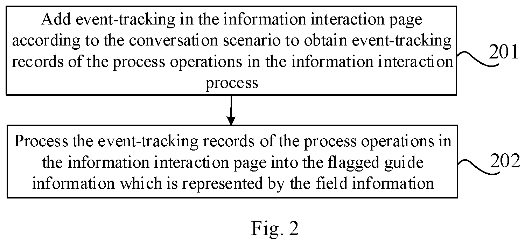

In a specific implementation, the flagged guide information includes each behavior operation of the user in the information interaction page in the conversation scenario, which may be obtained by way of event-tracking in the page, in order to be able to more comprehensively understand the service process of the conversation scenario. Further, according to the above embodiment, as shown in Figure 2, before step 102, the method further includes the following steps 201 to 202.

In 201, event-tracking is added in the information interaction page according to the conversation scenario to obtain event-tracking records of the process operations in the information interaction process.

In 202, the event-tracking records of the process operations in the information interaction page are processed into field-represented flagged guide information.

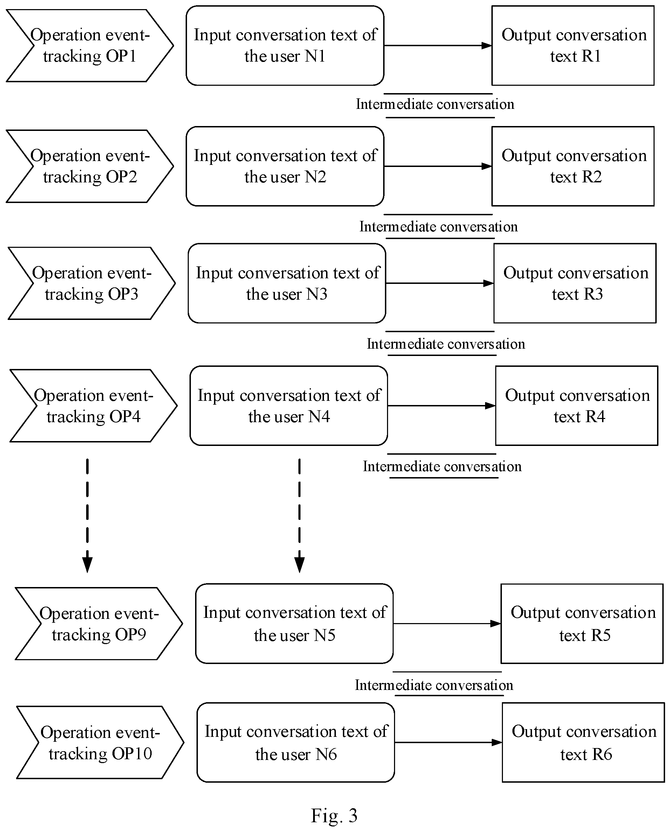

In this embodiment, the process of performing the event-tracking on the information interaction page according to the conversation scenario is equivalent to a data acquisition process of each behavior operation of the user in the information interaction page. For example, which buttons are clicked by the user in the information interaction page, which information interaction pages are browsed, which behavior operations are executed in the page, and the like are acquired. The data acquisition process includes, but is not limited to, a related technology for capturing, processing, and sending a user's behavior or an event, and an implementation process thereof. The specific event-tracking mode may monitor, collect and report user's behaviors by embedding a code fragment into a certain page or button. Exemplarily, a process of performing event-tracking on the information interaction page according to the conversation scenario is shown in Figure 3, which relates to 6 rounds of information interaction processes, and totally triggers 10 operation event-trackings in the information interaction page. Behavior data of the user in the information interaction page may be acquired through the operation event-trackings.

Specifically, in the process of acquiring the event-tracking records of the process operations in the information interaction process, by pre burying event points for behavior operations involved in the information interaction page in the service process, the event-tracking records of the process operations in the information interaction process may be obtained. The dependence and/or guidance among the behavior operations in the service process may be counted through attribute information such as the operation sequence, the operation duration and the like of each behavior, and the event-tracking records are processed into field-represented flagged guide information according to the dependence and/or guidance among the behavior operations in the service process.

The specifically acquired event-tracking record may include, but is not limited to, page information, user information, event information, device information, geographic location information, abnormal information, and the like. The page information may record basic information such as a URL, a title, a module to which the page belongs, and the like of a current page, and may be used to identify and distinguish different pages. The user information may record information such as a unique identifier of a user, a user type, and the like, and may be used to track user's behavior. The event information may record information such as an operation behavior of a user on an information interaction page, for example, a click button, a scroll page, and the like. Each event may include information such as an event type, a trigger element, and a trigger time. The device information may record information such as device attributes, such as an operating system, a browser type, a screen resolution, and the like, and may be used to analyze user device characteristics and optimize display of a page. The geographic location information may record a geographic location of the user, such as IP address, city, longitude and latitude, etc., and may be used for positioning the area where the user is located and providing personalized service. The abnormal information may record abnormal conditions in the page loading process, such as network errors, script errors, etc., and may be used for troubleshooting and repairing problems.

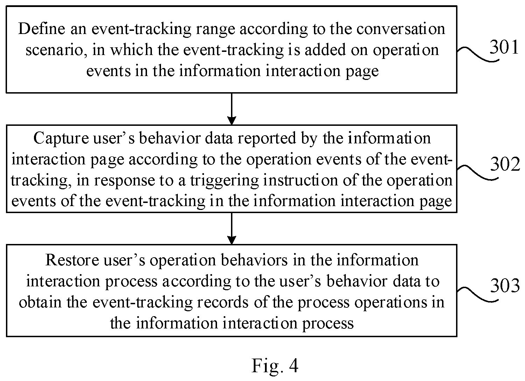

In the above embodiment, specifically as shown in Figure 4, step 201 includes the following steps 301 to 303.

In 301, an event-tracking range is defined according to the conversation scenario, in which the event-tracking is added on operation events in the information interaction page.

In 302, user's behavior data reported by the information interaction page is captured according to the operation events of the event-tracking in response to a triggering instruction of the operation events of the event-tracking in the information interaction page.

In 303, operation behaviors of the user in the information interaction process are restored according to the user's behavior data to obtain the event-tracking records of the process operations in the information interaction process.

The specific event-tracking range may be determined according to actual requirements and targets. Here, the event-tracking range may be a global event-tracking, which may place the buried code in the functional template of the webpage, so that the event-tracking is triggered when each page is loaded, and user's behavior data of the whole station are collected. Here, the event-tracking range may also be a partial page event-tracking, which may selectively set the event-tracking on a specific page according to service requirements. The pages may be key pages, landing pages, registration pages and the like. The conversion effect of user's behavior operation may be more accurately analyzed by tracking events in the pages. Here, the event-tracking range may also be an event-triggered event-tracking, which may trigger the event-tracking according to the specific operation behavior of the user. For example, when the user clicks a certain button, submits a form, and triggers a specific event, the events are recorded through the event-tracking so as to analyze the behavior path and the operation conversion of the user.

The operation events in the information interaction page at least include a page event and a click event. The page event is information of user access to a page, which may be used to obtain the user's access to the page and/or jump to the next page through the interface on the page. The click event refers to the user's clicking behavior on the page, and the content triggered by the user's button click may be obtained through the click event. For example, if keywords are required to be input after the user clicks a search button, the click event may be buried in the search button, and the keywords may be obtained through values reported by fields.

It can be understood that each operation behavior of the user in the information interaction page has an operation flow. The behavior path of the user may be analyzed through each operation behavior of the user in the information interaction page. The behavior path diagram of the user in the information interaction page is drawn, though which the user's operation behavior in the information interaction process may be restored, and the event-tracking records of the process operations in the information interaction process are obtained.

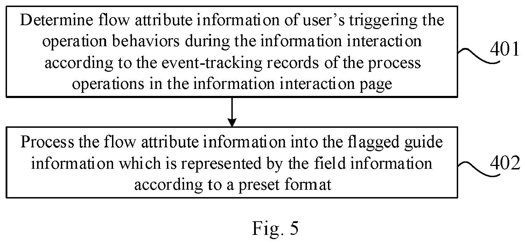

In the above embodiment, specifically as shown in Figure 5, step 202 includes the following steps 401 to 402.

In 401, flow attribute information for triggering the operation behaviors of the user during the information interaction is determined according to the event-tracking records of the process operations in the information interaction page.

In 402, the flow attribute information is processed into the field-represented flagged guide information according to a preset format.

The flow attribute information includes current operation behavior information of the user and interaction behavior information of the next round triggered by the current operation behavior. Specifically, in the event-tracking records, each interaction behavior triggered by the user in the information interaction page has a flow sequence. An operation behavior track of the user in the information interaction page may be generated according to the event-tracking records. A flow path of the information interaction page may be tracked through the operation behavior track. And then the current operation behavior information of the user is determined according to the flow path and the interaction behavior information of the next round triggered by the current operation behavior.

For example, the operation behavior track of the user in the information interaction page includes browsing products, adding shopping carts, submitting orders, and finally paying orders to return. The flow path traced to the information interaction page through the operation behavior track is a product page A - a shopping cart page B - an order submission page C - an order payment page D. The flow attribute information determined according to the flow path includes the operation information of browsing products in the page A, the operation information of adding shopping carts in the page B, the operation information of top post submission in the page C, and the operation information of order payment in the page D.

Furthermore, in order to enhance the flow guiding effect in the information interaction process, a preset format for controlling the process operation may be set according to the trigger mechanism of the event-tracking event in the information interaction process of the current round. For the trigger mechanism of the page event, the flow attribute information may be set as the field representation of the jump format. For example, the trigger events of the current round of information interaction process include page events triggered by link icons, according to which the page jump information associated with the flow attribute information may be processed into the field-represented flagged guide information including a jump page address, a jump page title, and the like. For a click event, the flow attribute information may be set as the field representation of a node format according to an event sequence. For example, the trigger events of the current round of information interaction process include click events triggered by a gesture icon, according to which the page operation information associated with the flow attribute information may be processed into the field-represented flagged guide information including page operation content, page operation duration, page operation position, and the like.

In the above embodiment, considering that the question-answer conversation text includes multiple rounds of information interaction, each round of information interaction corresponds to the standardized guidance information obtained by the event-tracking processing. Specifically in step 102, the method includes the following steps: defining a special embedded flag at a corresponding field position in the question-answer conversation text according to a buried position of the conversation scenario in the information interaction page; and adding the flagged guide information into the question-answer conversation text by using the special embedded flag. The way for defining a special embedded flag may be marking on the text of the question-answer conversation with a label mode, and may be inserting the flagged guide information into the text of the question-answer conversation text with an insertion mode, which is not limited herein.

In the above embodiment, specifically in step 103, the method includes the following steps: performing model training by using the question-answer conversation text with the flagged guide information, and strengthening the control capability of the process operations in the conversation scenario according to the flagged guide information in the training process; and determining the trained neural network model as the information interaction model of the conversation scenario when the iteration of the model training meets a preset condition. The information interaction model is used for generating an output conversation text with process operation guidance according to an input conversation text. The flagged guide information obtained by real-time event-tracking records is added in the model training process, so that the process control capability of the model can be activated, and the guiding effect on the next process can be enhanced by the output conversation text predicted by the model.

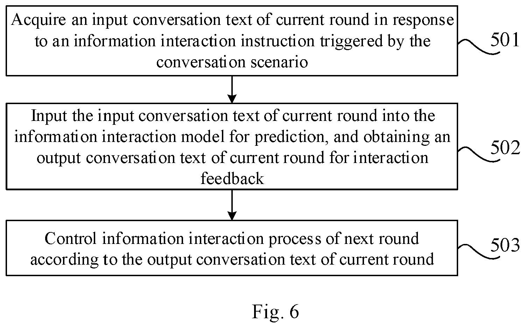

In view of that the number of connections in the connection pool can satisfy the conversation system and meanwhile no waste of connection resources is generated, further, in the above embodiment, as shown in Figure 6, after step 103, the method further includes the following steps 501 to 503.

In 501, the input conversation text of current round is acquired in response to an information interaction instruction triggered by the conversation scenario.

In 502, the input conversation text of current round is input into the information interaction model for prediction, and an output conversation text of current round for interaction feedback is obtained.

In 503, the information interaction process of a next round is controlled according to the output conversation text of current round.

In an actual application scenario, the input conversation text of each round is processed through the event-tracking record to obtain the flagged guide information of the current round. After the flagged guide information of the current round is obtained and the flagged guide information of the current round is added to the information interaction model, the output conversation text for interaction feedback of the current round may be obtained in a predictable mode. The output conversation text may show the process control capability due to the fact that the flagged guide information is added in the prediction process, so that the process loss in the information interaction process is avoided, and the integrity of information interaction in the conversation scenario is improved.

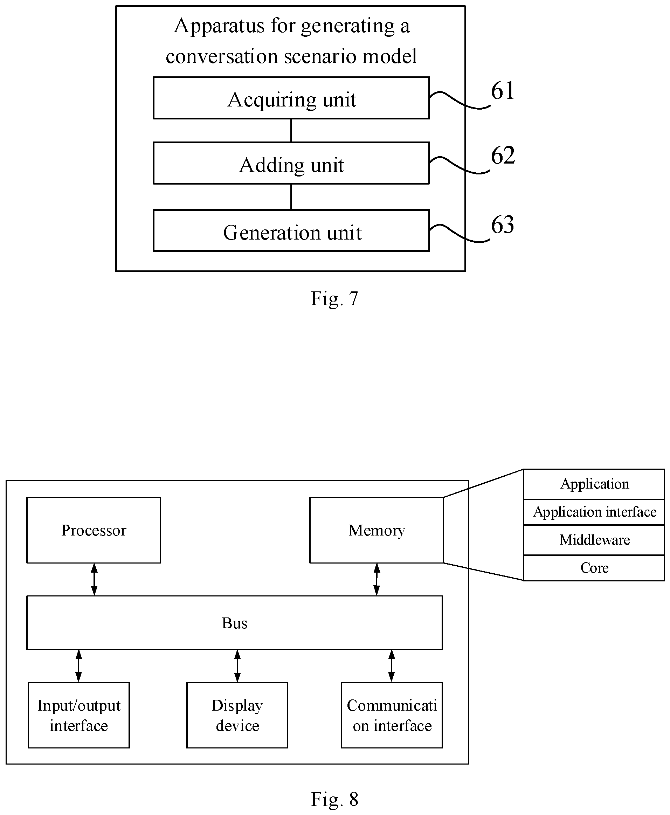

Further, as a specific implementation of the method according to Figures 1 to 6, an apparatus for generating a conversation scenario model is provided according to an embodiment of the present disclosure. As shown in Figure 7, the device includes: an acquiring unit 61, an adding unit 62, and a generation unit 63.

The acquiring unit 61 is configured to acquire a question-answer conversation text formed in a historical information interaction process of a conversation scenario, wherein the question-answer conversation text includes a plurality of rounds of text interaction information.

The adding unit 62 is configured to add flagged guide information into the question-answer conversation text, wherein the flagged guide information is field information obtained by processing event-tracking records in an information interaction page.

The generation unit 63 is configured to performing model training by using a question-answer conversation text with the flagged guide information to generate an information interaction model of the conversation scenario.

According to the apparatus for generating a conversation scenario model in the present disclosure, compared with the way of performing model training by using text information translated by conversation content in the prior art, a question-answer conversation text formed in a historical information interaction process of a conversation scenario is acquired, wherein the question-answer conversation text includes a plurality of rounds of text interaction information; flagged guide information is added into the question-answer conversation text, wherein the flagged guide information is field information obtained by processing event-tracking records in an information interaction page; and model training is performed by using a question-answer conversation text with the flagged guide information to generate an information interaction model of the conversation scenario. In the whole process, the flagged guide information is added in the question-answer conversation text, through which the control capability of the information interaction model on the conversation process in the training process is strengthened, so that the robot customer service controlled by the model can guide the user to trigger a text conversation which is more in line with process operation, and the guide loss of the operation process in the conversation process is avoided.

In a specific application scenario, the apparatus further includes an event-tracking unit and a processing unit.

The event-tracking unit is configured to perform event-tracking on the information interaction page according to the conversation scenario before adding flagged guide information into the question-answer conversation text to obtain event-tracking records of the process operations in the information interaction process.

The processing unit is configured to process the event-tracking records of the process operations in the information interaction page into field-represented flagged guide information.

In a specific application scenario, the event-tracking unit is specifically configured to: define an event-tracking range according to the conversation scenario, in which the event-tracking is added on operation events in the information interaction page, wherein the operation events at least include page events and click events; capture user's behavior data reported by the information interaction page according to the operation events of the event-tracking in response to a triggering instruction of the operation events of the event-tracking in the information interaction page; and restore user's operation behaviors in the information interaction process according to the user's behavior data to obtain the event-tracking records of the process operations in the information interaction process.

In a specific application scenario, the processing unit is specifically configured to: determine flow attribute information for triggering the operation behaviors of the user during the information interaction according to the event-tracking records of the process operations in the information interaction page, wherein the flow attribute information includes current operation behavior information of the user and interaction behavior information of the next round triggered by the current operation behavior; and process the flow attribute information into the field-represented flagged guide information according to a preset format.

In a specific application scenario, the adding unit is specifically configured to: define a special embedded flag at a corresponding field position in the question-answer conversation text according to a buried position of the conversation scenario in the information interaction page; and add the flagged guide information into the question-answer conversation text by using the special embedded flag.

In a specific application scenario, the generation unit is specifically configured to: perform model training by using the question-answer conversation text with the flagged guide information, and strengthening the control capability of the process operations in the conversation scenario according to the flagged guide information in the training process; and determine the trained neural network model as the information interaction model of the conversation scenario when the iteration of the model training meets a preset condition, wherein the information interaction model is used for generating an output conversation text with process operation guidance according to an input conversation text.

In a specific application scenario, the text interaction information of each round includes input conversation text and output conversation text, and the apparatus further includes an interaction unit, a prediction unit and a control unit.

The interaction unit, after the performing model training by using the question-answer conversation text with the flagged guide information to generate an information interaction model of the conversation scenario, is configured to: acquire the input conversation text of current round in response to an information interaction instruction triggered by the conversation scenario.

The prediction unit is configured to input the input conversation text of current round into the information interaction model for prediction, and to obtain an output conversation text of current round for interaction feedback.

The control unit is configured to control information interaction process of next round according to the output conversation text of current round.

It should be noted that other corresponding descriptions of the functional units related to the apparatus for generating a conversation scenario model provided in the present disclosure may refer to the corresponding descriptions in Figures 1 to 5, and are not described herein again.

Based on the above methods shown in Figures 1 to 5 correspondingly, a storage medium storing a computer program is also provided according to an embodiment of the present disclosure. Where the program, when executed by a processor, performs the method for generating a conversation scenario model shown in Figures 1 to 5.

Based on such understanding, the technical solution of the present disclosure may be implemented by a software product. The software product may be stored on a non-volatile storage medium (such as a CD-ROM, a USB drive, and a portable hard drive), and includes multiple instructions to cause a computing device (such as a personal computer, a server, or a network device) to perform the method according to the embodiments of the present disclosure.

Based on the method shown in Figures 1 to 5 and the virtual device shown in Figure 7, to achieve the above object, an entity device for generating a conversation scenario model is provided according to an embodiment of the present disclosure. The device may specifically be a computer, a smart phone, a tablet computer, a smart watch, a server, or a network device. The entity device includes a storage medium and a processor. The storage medium is configured to store a computer program. The processor is configured to execute the computer program to perform the method for generating a conversation scenario model as shown in Figures 1 to 5.

Optionally, the entity device may further include a user interface, a network interface, a camera, a radio frequency (RF) circuitry, a sensor, an audio circuitry, a WI-FI module, and so on. The user interface may include a display, an input unit such as a Keyboard, and the like. Optionally, the user interface may also include a USB interface, a card reader interface, and the like. The network interface may optionally include a standard wired interface, a wireless interface (e.g., WI-FI interface), and the like.

In an exemplary embodiment, referring to Figure 8, the entity device includes a communication bus, a processor, a memory, and a communication interface, and may further include an input/output interface, and a display device. The functional units may complete mutual communication through the bus. The memory stores a computer program, and the processor is configured to execute the program stored in the memory to perform the method for generating a conversation scenario model according to the above embodiments.

Those skilled in the art will appreciate that the structure of the entity device for generating a conversation scenario model provided in the present disclosure does not constitute a limitation to the entity device. The entity device may include more or fewer components, or may combine with some components, or may arrange a different component.

The storage medium may also include an operating system and a network communication module. The operating system is a program that manages the hardware and software resources of the entity device for generating a conversation scenario model, and supports the execution of the information processing program and other software and/or programs. The network communication module is used for realizing communication among components in the storage medium and other hardware and software in the information processing entity device.

As can be seen from the above description of the embodiments, those skilled in the art can clearly understand that the present disclosure can be implemented by software plus a necessary general hardware platform. According to the technical solutions of the present disclosure, compared with the prior art, the flagged guide information is added in the question-answer conversation text, through which the control capability of the information interaction model on the conversation process in the training process is strengthened, so that the robot customer service controlled by the model can guide the user to trigger a text conversation which is more in line with process operation, and the guide loss of the operation process in the conversation process is avoided.

Those skilled in the art will appreciate that the drawings are merely schematic representations of preferred embodiments and that the modules or flowchart illustrations are not necessary to practice the present disclosure. Those skilled in the art can understand that the modules in the device in the implementation scenario may be distributed in the device in the implementation scenario according to the implementation scenario description, and may also be located in one or more devices different from the present implementation scenario with corresponding changes. The modules of the implementation scenario may be combined into one module, or may be further split into multiple sub-modules.

The serial numbers of the embodiments of the present disclosure are only for description, and do not indicate any preference among the implementation scenarios. The embodiments disclosed above are only some specific embodiments of the present disclosure, and the present disclosure is not limited thereto. Any changes made by the skilled person in the art also fall into the protection scope of the disclosure.

## Claims

1. A method for generating a conversation scenario model, comprising:
acquiring a question-answer conversation text formed in a historical information interaction process of a conversation scenario, wherein the question-answer conversation text comprises multiple rounds of text interaction information;
adding flagged guide information into the question-answer conversation text, wherein the flagged guide information is field information obtained by processing event-tracking records in an information interaction page, wherein the adding flagged guide information into the question-answer conversation text comprises: adding event-tracking in the information interaction page to capture each behavior operation triggered by a user, generating the flagged guide information in the way of event-tracking records, and adding the flagged guide information to the question-answer conversation text as a guideline label of process operations; and
performing model training by using the question-answer conversation text with the flagged guide information to generate an information interaction model of the conversation scenario, wherein the question-answer conversation text with the flagged guide information has a guiding effect on the process operations in the information interaction page, and wherein on the basis of model training with the question-answer conversation text, the flagged guide information with control capability in multi-round interactions is added to activate process control capability of the information interaction model, so that the generated information interaction model guides the process operations in the conversation scenario.

2. The method according to claim 1, wherein before the adding flagged guide information into the question-answer conversation text, the method further comprises:
adding event-tracking in the information interaction page according to the conversation scenario to obtain event-tracking records of the process operations in the information interaction process; and
processing the event-tracking records of the process operations in the information interaction page into the flagged guide information which is represented by the field information.

3. The method according to claim 2, wherein the adding event-tracking in the information interaction page according to the conversation scenario to obtain event-tracking records of the process operations in the information interaction process comprises:
defining an event-tracking range according to the conversation scenario, in which the event-tracking is added on operation events in the information interaction page, wherein the operation events at least comprise page events and click events;
capturing user's behavior data reported by the information interaction page according to the operation events of the event-tracking, in response to a triggering instruction of the operation events of the event-tracking in the information interaction page; and
restoring user's operation behaviors in the information interaction process according to the user's behavior data to obtain the event-tracking records of the process operations in the information interaction process.

4. The method according to claim 2, wherein the processing the event-tracking records of the process operations in the information interaction page into the flagged guide information which is represented by the field information comprises:
determining flow attribute information of user's triggering the operation behaviors during the information interaction according to the event-tracking records of the process operations in the information interaction page, wherein the flow attribute information comprises user's current operation behavior information and next round of the interaction behavior information triggered by the current operation behavior; and
processing the flow attribute information into the flagged guide information which is represented by the field information according to a preset format.

5. The method according to claim 1, wherein the adding flagged guide information into the question-answer conversation text comprises:
defining a special embedded flag at a corresponding field position in the question-answer conversation text according to an event-tracking position of the conversation scenario in the information interaction page; and
adding the flagged guide information into the question-answer conversation text by using the special embedded flag.

6. The method according to claim 1, wherein the performing model training by using the question-answer conversation text with the flagged guide information to generate an information interaction model of the conversation scenario comprises:
performing model training by using the question-answer conversation text with the flagged guide information, and strengthening the control capability of the process operations in the conversation scenario according to the flagged guide information in the training process; and
determining the trained neural network model as the information interaction model of the conversation scenario when the iteration of the model training meets a preset condition, wherein the information interaction model is used for generating an output conversation text with process operation guidance according to an input conversation text.

7. The method according to claim 1, wherein the text interaction information of each round comprises input conversation text and output conversation text, and after the performing model training by using the question-answer conversation text with the flagged guide information to generate an information interaction model of the conversation scenario, the method further comprises:
acquiring an input conversation text of current round in response to an information interaction instruction triggered by the conversation scenario;
inputting the input conversation text of current round into the information interaction model for prediction, and obtaining an output conversation text of current round for interaction feedback; and
controlling information interaction process of next round according to the output conversation text of current round.

8. An apparatus for generating a conversation scenario model, comprising:
an acquiring unit configured to acquire a question-answer conversation text formed in a historical information interaction process of a conversation scenario, wherein the question-answer conversation text comprises multiple rounds of text interaction information;
an adding unit configured to add flagged guide information into the question-answer conversation text, wherein the flagged guide information is field information obtained by processing event-tracking records in an information interaction page, wherein the adding flagged guide information into the question-answer conversation text comprises: adding event-tracking in the information interaction page to capture each behavior operation triggered by a user, generating the flagged guide information in the way of event-tracking records, and adding the flagged guide information to the question-answer conversation text as a guideline label of process operations; and
a generation unit configured to performing model training by using the question-answer conversation text with the flagged guide information to generate an information interaction model of the conversation scenario, wherein the question-answer conversation text with the flagged guide information has a guiding effect on the process operations in the information interaction page, and wherein on the basis of model training with the question-answer conversation text, the flagged guide information with control capability in multi-round interactions is added to activate process control capability of the information interaction model, so that the generated information interaction model guides the process operations in the conversation scenario.

9. A computer device, comprising: a memory storing a computer program; and a processor; wherein the processor is configured, when executing the computer program, to perform steps of the method for generating a conversation scenario model according to any one of claims 1 to 7.

10. A computer-readable storage medium storing a computer program, wherein the computer program, when executed by a processor, performs steps of the method for generating a conversation scenario model according to any one of claims 1 to 7.
